# FASCICULE DE BREVET EUROPEEN

(11) **EP 1 413 622 B1**
(45) Date de publication et mention de la délivrance du brevet: **30.09.2009**
(21) Numéro de dépôt: 03292602.4
(22) Date de dépôt: 20.10.2003
(51) Int. Cl.: C10G 11/18, B01J 8/24

(54) **Procédé de craquage catalytique dans deux zones de craquage integrées de sévérité différente suivies d'une zone de refroidissement**
Verfahren zur flüssigen katalytischen Spaltung in zwei integrierten, mit unterschiedlicher Strenge, bei einer Abkühlungszone gefolgten Spaltenzonen
Process of fluid catalytic cracking in two integrated cracking zones of different severity, followed by a cooling zone

(30) Priorité: 23.10.2002 US 278019
(43) Date de publication de la demande: 28.04.2004
(73) Titulaire: Institut Français du Pétrole, 92852 Rueil-Malmaison Cedex (FR)
(72) Inventeur: Gauthier, Thierry, 69530 Brignais (FR); Cauffriez, Hervé, 69530 Oelienas (FR); Ross, Joseph, Princeton New Jersey 08540 (US)

(56) Documents cités:
- US-A- 3 440 020
- US-A- 4 417 974

## Description

L'invention se place dans le contexte de l'évolution des unités de craquage catalytique destinées à traiter des charges de plus en plus diversifiées pour offrir une gamme de produits de plus en plus large parmi lesquels les produits "traditionnels" comme l'essence et le gasoil auxquels s'ajoute une demande d'oléfines, plus particulièrement de propylène. L'évolution du FCC (abréviation de Fluid Catalytic Cracking, que nous utiliserons dans la suite du texte pour désigner les unités de craquage catalytique en lit fluidisé) vers un craqueur pétrochimique remonte à moins d'une dizaine d'années et se traduit par une sévérisation des conditions de craquage: température plus élevée, temps de séjour plus courts, rapport C/O plus élevé, qui correspond chimiquement à un craquage secondaire de l'essence produite. La solution apportée par la présente invention va permettre de faire fonctionner une unité de craquage catalytique à ses conditions habituelles de fonctionnement, et de superposer à ce fonctionnement une partie de l'unité travaillant dans des conditions de craquage plus sévères qui vont conduire à la production d'une certaine quantité additionnelle d'oléfines, plus particulièrement de propylène. L'intérêt de l'invention est bien entendu de conserver une unité FCC d'architecture classique, et moyennant des modifications technologiques relativement simples, d'offrir une gamme de produits répondant mieux aux besoins du marché. La demande en propylène augmente en effet notablement depuis de nombreuses années avec un taux de croissance annuel souvent supérieur de pratiquement un point par rapport à celui de l'éthylène. Le FCC dans des conditions normales de fonctionnement sur une charge traditionnelle de type distillat sous vide, produit de 3 à 4 % de propylène. Il est toutefois possible d'augmenter substantiellement la production d'oléfines, et plus particulièrement de propylène, par la sévérisation des conditions opératoires, et par l'utilisation d'additifs spécifiques au catalyseur de craquage. De tels additifs, parmi lesquels on peut citer la zéolithe de type ZSM 5, présentent une sélectivité de forme permettant d'orienter sélectivement le craquage des molécules intermédiaires vers le propylène sans accentuer la formation de coke et de gaz secs.
Ces conditions de craquage sévères, à la fois thermiques et catalytiques, conduisent à un craquage notable de composés situés dans l'intervalle de distillation de l'essence et fournissent des quantités accrues de propylène.
Cette orientation connue du craquage catalytique vers la production de propylène bouleverse la structure des rendements avec une chute du rendement en essence qui peut passer par exemple de 50 % à environ 25 % au bénéfice des coupes C3/C4 et des gaz plus légers qui peuvent augmenter corrélativement de 15 à pratiquement 40 %. Le gain du rendement en propylène est en effet obtenu au détriment du rendement en essence. Cette diminution du rendement en essence n'est toutefois pas souhaitable, la demande du marché en essence restant soutenue. Il y a donc un réel besoin d'une évolution du FCC qui lui permettrait de conserver pleinement son rôle de producteur d'essence (et de gasoil) tout en augmentant sa capacité à produire des oléfines et notamment du propylène.

L'invention présente une solution technologique simple à ce problème, et ne nécessite pas la construction d'une unité spécifique, L'invention s'applique très bien au remodelage d'unités existantes. Elle consiste essentiellement en une alimentation étagée du riser en catalyseur régénéré, ce catalyseur conservant un schéma de circulation classique, comme dans une unité de FCC traditionnelle. Une première zone d'introduction du catalyseur située à la base du riser, comme dans le schéma d'une unité FCC conventionnelle, permet d'assurer la production de base en essence et gasoil ainsi que celle des autres coupes issues d'une unité FCC conventionnelle, et une seconde introduction de catalyseur régénéré située plus haut que la première, et contactant une charge spécifique va permettre moyennant certaines conditions opératoires, d'apporter un supplément d'activité qui, en fonction de la dite charge spécifique additionnelle, va se traduire par le supplément de production d'oléfines recherché. Si de plus, l'unité est opérée avec utilisation d'additifs au catalyseur conventionnel tel que la ZSM5, la production d'oléfines, et particulièrement de propylène, sera majorée par rapport à ce qu'elle serait sur une unité FCC conventionnelle opérée avec le même additif.
Il existe plusieurs brevets mentionnant l'injection de coupes hydrocarbures issues de l'unité FCC, par exemple du naphta recyclé, en amont de l'injection de charge pour obtenir une conversion vers le propylène dans des conditions sévères de C/O et de température. C'est par exemple le cas du brevet EP 0849 347 A2 d'Exxon et du brevet FR 88 04800 d'IFP. Dans le type de configuration décrit dans ces brevets, le fait de procéder à un premier craquage sur une charge légère avant le craquage de la charge principale diminue considérablement le potentiel en température du catalyseur régénéré et rend de ce fait très difficile la vaporisation de la charge principale.
Le brevet US 3.440.020 de Mobil, décrit un système de deux riser tubulaires placés coaxialement l'un à l'intérieur de l'autre, et débouchant indépendamment l'un de l'autre dans le réacteur. L'un des riser est alimenté par une charge légère et l'autre par la charge de base, plus lourde. Dans ce brevet les deux risers se comportent de manière totalement indépendante, et le catalyseur utilisé pour le craquage de la charge légère n'est donc pas utilisé pour augmenter la conversion de la charge principale.
Les brevets US 4.578.183 de Mobil et EP 0180291 de Mobil décrivent un tube central positionné coaxialement à l'intérieur du riser et situé à la partie inférieure du dit riser. La charge est introduite axialement à la base du tube central, et est contactée à l'intérieur de ce tube par une partie du catalyseur. L'autre partie du catalyseur court-circuite complètement la zone d'injection et de vaporisation de la charge en circulant à l'extérieur du système de tube et rejoint le flux de catalyseur circulant à l'intérieur du tube par des orifices situés à la paroi de ce tube central. Il n'y a pas dans cette configuration de contrôle de la température en aval de la zone de vaporisation. De plus, contrairement à la présente invention, la charge principale est introduite axialement et non en paroi à travers un ensemble d'injecteurs tels que ceux décrits dans le brevet FR 87 14194 de la demanderesse.
Le brevet US 4.417.974 de Chevron propose une configuration caractérisée par un tube situé à l'intérieur du riser et de manière sensiblement coaxiale, ce tube étant alimenté par une partie du catalyseur régénéré et une charge hydrocarbonée dans des conditions de craquage douces puisque la température à l'intérieur du tube central est comprise entre 400 et 500°C. Dans ces conditions, on peut penser qu'il y a très peu de craquage à l'intérieur de ce tube central. L'autre partie du catalyseur circule à l'extérieur du tube central et contacte la charge principale introduite à la paroi du riser. Les flux de catalyseur de même densité issus du tube central et de la partie annulaire du riser se rejoignent à un niveau relativement élevé dans le riser et aucun système de refroidissement de ces flux n'est revendiqué car la température d'écoulement dans le tube central est modérée.
La présente invention se démarque nettement du brevet cité par les conditions de craquage à l'intérieur du tube central qui sont des conditions de craquage sévère, et par le fait qu'en aval du tube central, il est prévu une injection d'une charge facilement vaporisable destinée à contrôler la température en sortie de riser.

Un des objets de l'invention est de remédier aux inconvénients de l'art antérieur.
Un autre objet est de favoriser la sélectivité en GPL particulièrement en oléfines légères et notamment en propylène, et/ou d'améliorer la capacité de conversion. Un autre objet est de permettre un craquage sévère dans la zone tubulaire du riser tout en ayant des conditions de craquage douces dans la partie supérieure du riser.

Plus précisément, l'invention concerne un procédé de craquage catalytique en lit fluidisé d'une charge hydrocarbonée dans une zone (1) réactionnelle ascendante ou riser comprenant l'introduction (14) d'un catalyseur régénéré à la partie inférieure du riser, l'injection de la charge au dessus de l'introduction du catalyseur, l'injection (5) d'un gaz de fluidisation du catalyseur à la base du riser, la zone réactionnelle comprenant en sa partie inférieure une zone tubulaire interne et sensiblement coaxiale dans laquelle on fait circuler une partie du catalyseur régénéré au moyen d'un fluide de transport introduit à l'extrémité inférieure de la zone tubulaire, on fait circuler la partie restante du catalyseur et la charge dans une zone annulaire définie entre la zone tubulaire et la paroi du riser, le procédé étant caractérisé en ce qu'on fait circuler ladite partie du catalyseur et le fluide de transport dans la zone tubulaire dans des conditions de température et/ou de rapport massique catalyseur sur fluide de transport plus sévères que les conditions de température et/ou de rapport massique catalyseur sur charge qui règnent dans la zone annulaire (après injection de la charge). On mélange un premier flux sortant de la zone tubulaire et un deuxième flux sortant de la zone annulaire et on refroidit le mélange obtenu contenant le catalyseur par l'injection d'un fluide inerte et vaporisable au niveau ou au-dessus de l'injection de la charge; et on fait craquer le mélange refroidi dans la partie supérieure de la zone réactionnelle.

Selon une autre caractéristique du procédé, le rapport massique catalyseur sur charge peut être compris entre 2 et 10 dans la zone annulaire et entre 5 et 20 dans la zone tubulaire, ledit rapport dans la zone tubulaire étant supérieur à celui dans la zone annulaire.

Selon une autre caractéristique du procédé, le rapport massique catalyseur sur charge dans la zone annulaire peut être compris entre 4 et 7 et celui dans la zone tubulaire est compris entre 8 et 15.

Selon une autre caractéristique du procédé, on peut refroidir ledit mélange de façon que la température dans la partie supérieure de la zone réactionnelle soit comprise entre 500 et 550°C.

Selon une autre caractéristique du procédé, la masse volumique du catalyseur dans la partie de la zone annulaire située en dessous de l'injection de la charge peut être comprise entre 200 et 600kg/m³ alors que la masse volumique dans la zone tubulaire, plus faible que celle dans cette partie de la zone annulaire, est comprise entre 30 et 200kg/m³.

On peut contrôler la température en sortie de la zone réactionnelle en contrôlant le débit de catalyseur régénéré et le débit du fluide inerte et/ou vaporisable.

Il est également possible de contrôler la température en sortie de la zone tubulaire en contrôlant le débit du fluide de transport.

On peut aussi contrôler la température en sortie de la zone annulaire en contrôlant le débit de catalyseur régénéré et le débit du fluide inerte et/ou vaporisable.

La zone tubulaire comprend une extrémité supérieure de sortie du premier flux, généralement, au même niveau ou au-dessus du niveau d'injection de la charge et au même niveau ou au dessous du niveau d'injection du fluide inerte.

L'invention consiste à réaliser avec un minimum de modifications technologiques un double craquage en parallèle au sein du riser d'une unité de FCC par la mise en place à l'intérieur du dit riser d'un tube interne qui va jouer le rôle d'un second riser, fonctionnant en parallèle du premier. Pour la clarté de l'exposé nous appellerons dans la suite du texte premier craquage, le craquage effectué sur une charge traditionnelle de type distillat sous vide ou résidu à l'intérieur du riser qu'on appellera charge principale, et second craquage le craquage effectué à l'intérieur du tube interne sur une charge spécifique. La technologie utilisée pour la mise en oeuvre de ce second craquage spécifique consiste à implanter à l'intérieur du riser la zone tubulaire comprenant un tube interne positionné sensiblement coaxialement au riser, dont l'extrémité inférieure est située à un niveau quelconque, au-dessous du niveau d'injection de la charge principale, et dont l'extrémité supérieure débouche avantageusement à un niveau situé au dessus de la zone d'injection de la dite charge principale, et au dessous du niveau d'injection d'une charge inerte et facilement vaporisable destinée à contrôler la température du riser, de sorte que le catalyseur introduit à la base de ce tube interne ne rencontre pas directement la charge principale et ne contribue donc pas à sa vaporisation.

Pour éviter toute confusion, on continuera d'appeler riser le riser de l'unité de FCC qui, du fait de la présence sur une partie de sa longueur d'un tube interne, présentera une partie annulaire suivie dans le sens d'écoulement des fluides et du catalyseur, d'une partie cylindrique. La totalité du catalyseur régénéré continue d'être introduite à la base du riser dans un état de fluidisation dense, comme c'est actuellement le cas dans les unités de FCC. Mais une partie de préférence mineure de ce catalyseur est dirigée au moyen d'un fluide de transport adéquat, réactif ou non, à l'intérieur du tube interne. L'autre partie du catalyseur circule autour de ce tube interne dans la zone annulaire du riser, et contacte la charge principale en assurant sa vaporisation puis son craquage ultérieur.
La partie de catalyseur introduite à l'intérieur du tube interne à co-courant avec l'écoulement de catalyseur autour du tube, au moyen d'un gaz de transport présente un état de densité d'écoulement nettement plus faible que la partie de catalyseur circulant dans la zone annulaire. Cette différence de densité produit par un effet de gazosiphon un mouvement de circulation ascendant à l'intérieur du tube interne et un mouvement de circulation autour du tube interne dans la zone annulaire qui va permettre l'alimentation du tube interne. Le débit de catalyseur circulant dans le tube interne sera ajusté au moyen du gaz de transport. Il pourra également être ajusté en cas de besoin par une vanne de type "plug valve", c'est à dire une vanne fonctionnant comme une sorte de piston, telle qu'on en trouve à la base du lift (élévateur) permettant de faire passer le catalyseur du premier au second étage de régénération des unités de type R2R de la demanderesse. Une telle vanne permet d'obturer partiellement et de façon variable la section d'entrée ouverte au catalyseur, pour régler le débit de celui-ci. Avantageusement, le gaz de transport pourra être, ou comprendre un ou plusieurs hydrocarbures que l'on va craquer dans des conditions sévères, tel que de l'essence légère en vue de produire du propylène. Cette variante présente en outre l'avantage supplémentaire de refroidir le catalyseur circulant dans le tube interne, ce qui est essentiel pour contrôler la température en aval dans le riser, et ceci sans coker significativement le catalyseur puisque le delta coke (augmentation du taux de coke du catalyseur) induit par un craquage d'essence légère reste très faible. Le refroidissement de catalyseur circulant à l'intérieur du tube par l'effet de la vaporisation et de la réaction d'une charge hydrocarbure telle que l'essence légère étant insuffisant, on prévoit en général le refroidissement de ce catalyseur en aval du tube interne par tout moyen connu, comme par exemple une injection d'une charge inerte et facilement vaporisable tel que cela est couramment pratiqué dans les unités de FCC. L'injection d'un inerte qui va se vaporiser en aval de la sortie du tube présente de plus l'intérêt de créer une turbulence forte qui favorisera le mélange entre le catalyseur et les fluides sortant du tube, et le catalyseur et les fluides qui ont circulé à l'extérieur du tube.

Pour absorber les variations d'expansion molaire, la partie inférieure de la zone réactionnelle dans laquelle on injecte la charge et qui comprend la zone annulaire et la zone tubulaire, peut être au moins en partie de forme tronconique, la base du tronc de cône étant en général au voisinage de l'extrémité supérieure de la zone tubulaire.

Pour résister à l'érosion qui peut être importante, à cause du mouvement du catalyseur dans cette zone, mais aussi à cause des moyens utilisés pour atomiser la charge qui peuvent induire des vitesses d'écoulement localement fortes, le tube interne devra être choisi dans un matériau résistant à l'abrasion à l'extérieur du tube, particulièrement dans la zone voisine de l'injection de charge. On veillera également à protéger les autres parties de ce tube pour améliorer sa tenue mécanique. On pourra par exemple utiliser un tube en acier carbone, sur lequel on aura déposé des couches de ciment réfractaire, fixées au parois du tube grâce à des ancrages soudés aux parois, ou grâce à des structures en nid d'abeille, du type hexmesh (à mailles hexagonales) par exemple, bien connues de l'homme du métier. On peut également envisager d'effectuer sur un tube en acier des traitements de surface pour obtenir un revêtement résistant tel que la stellite. On citera également la projection thermique plasma sur un tube métallique qui permet d'obtenir des revêtements de type céramique très résistants à l'abrasion.

Les modifications à apporter à une unité de FCC traditionnelle sont donc limitées à l'installation du tube interne, à la mise en place d'une injection du fluide de transport du catalyseur dans le tube interne, éventuellement d'un système d'injection sommaire lorsque ce fluide de transport sera une charge spécifique à craquer, et à la mise en place d'une injection d'un fluide facilement vaporisable, en aval du débouché du tube interne. si cette dernière n'existe pas déjà sur l'unité FCC considérée.

### Description sommaire des figures

L'invention sera mieux comprise au vu des figures illustratives suivantes, parmi lesquelles :

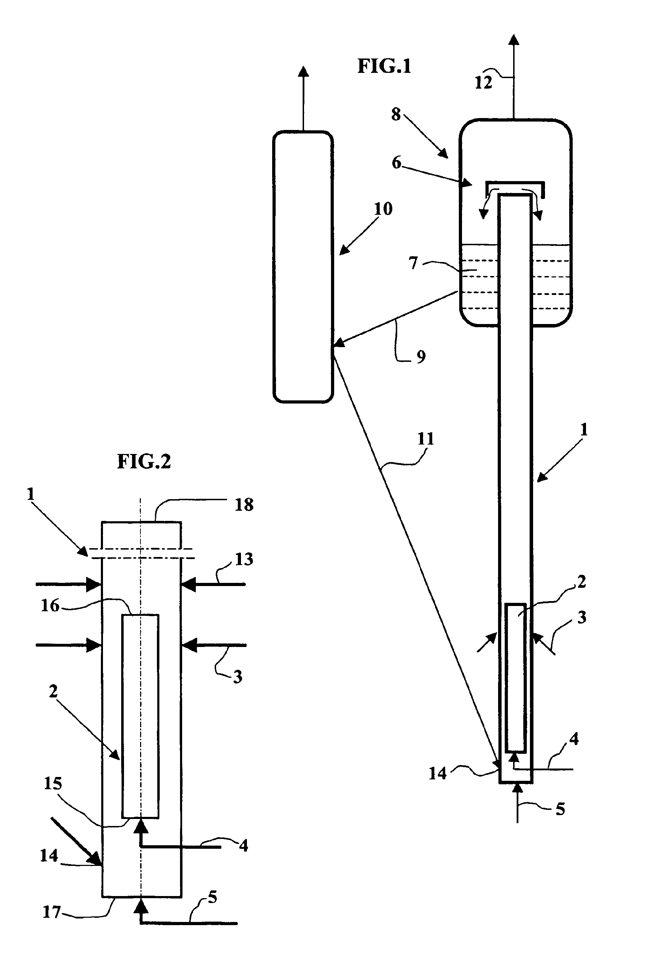

La figure 1 présente l'architecture générale d'une unité de FCC selon l'invention, et la figure 2 est une représentation du tube interne avec le détail de l'introduction du fluide de transport du catalyseur et de la charge spécifique de refroidissement.

La figure 1 présente en exemple le schéma d'une unité FCC classique dans lequel on trouve dans le sens de circulation du catalyseur, un riser (1) alimenté à sa base en catalyseur régénéré par une ligne (11) et terminé à son extrémité supérieure par un système de séparation gaz solide (6) qui peut être de tout type connu de l'homme de l'art, depuis un simple séparateur balistique reposant sur l'impact du mélange gaz /solide sur une cible, jusqu'à des systèmes plus élaborés tels que des cyclones directement connectés à l'extrémité supérieure du riser ou des systèmes spécifiques favorisant le désengagement inertiel rapide des vapeurs produites et du catalyseur qui reposent également sur une mise en rotation de la suspension gaz/solide et dont on trouvera par exemple une description dans les brevets EP-A-0852963 et EP-A-1017762. Le riser est défini dans le cadre de la présente invention comme une enceinte à symétrie axiale, de forme allongée selon un axe sensiblement vertical, et pouvant présenter ou non des variations de section. Le riser (1) présente une extrémité inférieure (17) fermée et une extrémité supérieure (18) ouverte et pouvant communiquer avec le système de séparation gaz /solide (6) contenu dans une enceinte de séparation et de stripage (8).
Le catalyseur est ensuite dirigé vers une zone de stripage (7) qui permet de récupérer une partie des hydrocarbures adsorbés à la surface du catalyseur, avant d'être dirigé vers une zone de régénération (10) par une conduite (9). Cette zone de régénération (10) ne sera pas décrite dans le présent texte dans la mesure où il ne s'agit pas d'une partie déterminante pour l'invention Toute zone de régénération en une ou plusieurs étapes, telle que celle existant dans les unités de type R2R, est parfaitement compatible avec la présente invention qui ne nécessite aucune modification de la dite zone de régénération sur une unité FCC existante. Les effluents de la réaction de craquage sont évacués de l'enceinte (8) par une ligne (12) pour être dirigés vers une zone de fractionnement non représentée sur la figure1.
Le catalyseur régénéré introduit à la base du riser (1) au moyen de la ligne (11), est séparé en deux fractions, une fraction en écoulement dense à des niveaux de densité apparente compris entre 600 et 200 kg/m³, de préférence entre 250 et 400 kg/m³ qui circule dans la partie annulaire du riser (1) jusqu'à la zone d'injection de charge, et une fraction à l'état dilué à des niveaux de densité inférieurs et compris entre 200 et 30 kg/m³, et préférentiellement compris entre 100 et 50 kg/m³, qui circule à l'intérieur d'un tube interne (2) situé dans la partie inférieure du riser. Les débits circulant à l'intérieur et à l'extérieur du tube à partir d'une alimentation unique en catalyseur régénéré sont imposés par la différence de densité d'écoulement entre les deux fractions de catalyseur. La fraction diluée circulant à l'intérieur du tube interne est créée par l'injection au moyen d'une ligne (4) d'un fluide de transport du catalyseur qui peut être liquide ou gazeux. Parmi les fluides gazeux, on peut citer l'azote, la vapeur d'eau, le fuel gaz, le gaz de pétrole liquéfié ( GPL) ou un mélange quelconque de ces différents produits. Parmi les fluides liquides on peut citer l'essence légère dont le point final d'ébullition se situe aux environs de 160°C, l'essence lourde dont le point d'ébullition initial est aux environ de 160°C et le point final d'ébullition est aux environs de 220°C, le light cycle oil (LCO) c'est-à-dire le gasoil léger de craquage, dont le point initial d'ébullition est aux environs de 220°C et le point final d'ébullition se situe aux environs de 350°C,ou plus généralement toute coupe pétrolière dont le point final d'ébullition est inférieur à 360°C et leurs mélanges. On peut également considérer des coupes pétrolières synthétiques telles que les produits liquides de procédés d'oligomérisation de coupes C4, C5 ou C6 qui contiennent une forte proportion d'oléfines longues en C8-C10 qui craqueront préférentiellement en formant du propylène. Bien entendu, lorsque le fluide de transport est liquide, compte tenu de la température du catalyseur à l'entrée du tube interne qui est pratiquement celle du catalyseur en sortie de la zone de régénération, soit aux environ de 800°C, il se produira une vaporisation du fluide de transport qui contribuera au refroidissement du catalyseur et au contrôle de la température en sortie de riser. Généralement, on utilise comme fluide de transport un fluide réactif, par exemple de l'essence oléfinique, additionné d'un fluide inerte, par exemple de la vapeur d'eau.
Le fluide de transport (4) est introduit à la base du tube interne (2) à un débit tel que la densité moyenne de l'écoulement dans le tube interne est strictement inférieure à la densité de l'écoulement à la partie inférieure du riser. Le taux de vide moyen de l'écoulement à l'intérieur du tube interne peut être supérieur à 0,8 et préférentiellement supérieur à 0,9.
Le flux surfacique de l'écoulement à l'intérieur du tube interne est compris entre 0,1 et 10 fois le flux surfacique de l'écoulement dans le riser (1) (flux moyen global juste au-dessus de l'injection de la charge dans la zone annulaire), et préférentiellement compris entre 0,5 et 3 fois le flux surfacique de l'écoulement dans le riser.
Dans le cas où le fluide de transport est une charge hydrocarbonée contenant des molécules à au moins 4 atomes de carbone susceptibles de craquer catalytiquement, la température en sortie du tube interne sera généralement comprise entre 520°C et 700°C, notamment entre 520°C et 650°C, et préférentiellement entre 560 et 600°C. Typiquement, cette température sera plus élevée, par exemple de 40 à 120°C au-dessus, que celle de la sortie de la charge principale (3) de la zone annulaire. L'ajustement de cette température à la valeur voulue peut se faire par l'intermédiaire du débit de catalyseur circulant à l'intérieur du tube interne. Le débit de catalyseur sera lui même contrôlé soit directement par le débit de fluide de transport dans le cas où le tube interne ne comprend aucun organe de régulation spécifique du débit de catalyseur, soit par un organe de régulation spécifique de ce débit de catalyseur parmi lesquels on peut citer les vannes de type "plug valve", ou des vannes à glissière, ou tout autre type d'organe permettant de faire varier la section d'admission du catalyseur à la base du tube interne.
Un moyen d'introduction d'un gaz de fluidisation (5) est situé à la base du riser (1) et permet de contrôler la densité du catalyseur dans cette zone. Ce moyen d'introduction existe déjà sur les unités FCC et n'a pas besoin d'être modifié pour les besoins de la présente invention. Le gaz de fluidisation pourra être choisi parmi les gaz suivants: azote, vapeur d'eau, fuel gaz ou GPL, ou tout autre gaz inerte chimiquement.
Le catalyseur régénéré est introduit à la base du riser (1) par l'intermédiaire d'un moyen d'introduction (14) qui n'a pas besoin d'être modifié par rapport à celui qui existe déjà dans toute unité FCC. Pour une bonne circulation du catalyseur, cette introduction du catalyseur (14) se situe en général en amont de l'injection de charge principale (3), mais elle peut, sans incidence pour la circulation de catalyseur, être située en amont ou en aval de l'extrémité inférieure du tube interne (2).
Ceci sera particulièrement intéressant dans le cas du remodelage d'une unité FCC sur laquelle existeront des possibilités d'extension vers le bas du riser En effet, dans ce cas, on pourra rajouter l'élément de riser contenant le tube interne (2) à la partie inférieure du riser existant, sans modifier le moyen d'introduction du catalyseur (14). L'extrémité inférieure du tube interne (2) se situera alors à un niveau inférieur à celui de l'introduction du catalyseur (14) sans que ceci présente le moindre inconvénient. L'introduction de la charge principale à l'intérieur du riser se fera par un système d'injection adéquate (3) tel qu'il a été décrit par exemple dans le brevet
EP-A-312428. La charge principale sera un distillat sous vide (DSV), un résidu atmosphérique (RA), un résidu sous vide (RSV) ou un mélange quelconque de ces diverses coupes. La seule différence par rapport à la configuration d'injection d'une unité traditionnelle de FCC est que l'extrémité supérieure du tube interne débouchant de préférence en aval du système d'injection de la charge (3), cette injection de charge aura lieu dans la zone annulaire du riser autour du tube central, ce qui conduira éventuellement à réduire un peu les vitesses d'injection en sortie des atomiseurs. La phase gazeuse en sortie des injecteurs aura typiquement une vitesse comprise entre 20 et 100 m/s, préférentiellement 50 à 80 m/s. Typiquement, le niveau d'injection de la charge (3) est disposé sensiblement au-dessus de celui de l'injection du fluide de transport (4) dans la zone tubulaire. Ceci permet l'obtention d'un rapport massique catalyseur sur charge (hydrocarbonée) notablement plus élevé dans la zone tubulaire, par effet de gasosiphon. La différence entre les niveaux d'introduction du fluide de transport (4), typiquement réactif, et de la charge (3) est généralement comprise entre 0,5 et 12 m, de préférence entre 1 et 10 m. Cette différence de niveaux est avantageusement comprise entre 20% et 90% de la hauteur totale de la zone tubulaire. Le rapport massique catalyseur sur charge, noté C/O, sera dans la zone annulaire compris habituellement entre 2 et 10, et préférentiellement compris entre 4 et 7. Dans tous les cas, ce rapport sera suffisant pour permettre la vaporisation totale de la charge et maintenir une température du mélange catalyseur /charge après vaporisation supérieure à 500°C, par exemple 510 à 550°C.
Le tube interne (2), entièrement contenu à l'intérieur du riser (1), est défini de manière générale comme une enceinte à symétrie axiale, de forme allongée selon un axe sensiblement vertical, et disposée de manière sensiblement coaxiale par rapport au riser (1), et comportant une extrémité inférieure ouverte (15), et une extrémité supérieure ouverte (16). L'extrémité inférieure (15) est située à un niveau strictement inférieur au niveau d'introduction de la charge principale (3), et l'extrémité supérieure (16) est située à un niveau supérieur ou égal, de préférence supérieur au niveau d'introduction de la charge (3) et inférieur ou égal, de préférence inférieur au niveau d'injection du fluide inerte et facilement vaporisable (13) destinée à contrôler la température du riser. La section moyenne occupée par le tube interne (2) rapportée à la section du riser à la même élévation (1), se situe généralement dans la plage 0,1 à 0,5, et avantageusement 0,12 à 0,45 et préférentiellement dans la plage 0,15 à 0,30 au niveau des injecteurs de charge. La section du tube interne (2) n'est pas nécessairement constante, mais peut présenter des variations, notamment à sa partie inférieure qui pourra être munie d'une restriction destinée à provoquer une perte de charge permettant de mieux contrôler le débit de catalyseur entrant à l'intérieur du tube interne. La longueur du tube interne (2) sera définie en fonction du temps de séjour recherché dans le cas où un craquage d'une charge spécifique a lieu à l'intérieur du dit tube interne. Dans le cas du craquage d'une essence légère, le temps de séjour sera compris entre 100 ms et 10s, préférentiellement compris entre 0,5 et 5 s.
La régulation de température sortie riser est effectuée de manière classique à partir du débit de catalyseur régénéré entrant dans le riser au moyen d'une vanne, par exemple de type à glissière disposée sur la ligne (11) d'amenée du catalyseur régénéré vers le riser.
La température en sortie du riser est fixée en fonction des conditions de craquage recherchées dans une plage comprise entre 500 et 550°C.
Il y a nécessité de prévoir, s'il n'existe pas déjà sur l'unité, un système d'injection (13) d'un fluide léger, se vaporisant facilement, positionné avantageusement en aval de l'extrémité supérieur du tube interne, de manière à pouvoir contrôler la température en sortie du riser dans tous les cas envisageables, c'est à dire en particulier dans le cas où le fluide de transport dans le tube interne n'est pas vaporisable et ne subit aucune réaction à l'intérieur du dit tube. Le fluide utilisé pour cette injection (13) pourra être une coupe pétrolière quelconque ayant un point final d'ébullition inférieur à 360°C, comme par exemple une partie du LCO produit par l'unité.

Les conditions de bonne circulation du catalyseur à l'intérieur du tube interne et à l'extérieur du dit tube dans la zone annulaire du riser, seront avantageusement réalisées si le tube interne a son extrémité inférieure située strictement au dessous du niveau d'injection de la charge principale, et son extrémité supérieure située au dessus du niveau d'injection de la charge principale tout en restant au dessous du niveau d'injection du fluide inerte et facilement vaporisable (13). Dans certains cas il pourra être avantageux de situer l'extrémité inférieure du tube interne au-dessous du niveau d'introduction du catalyseur régénéré dans le riser. Ces conditions ne sont pas contraignantes et rendent très facile la mise en oeuvre de la présente invention.

Dans le cas où l'on souhaite faciliter l'introduction du catalyseur à l'intérieur du tube interne, il sera possible de munir ce dernier d'au moins une restriction à son extrémité inférieure permettant de créer une perte de charge qui va faciliter le contrôle du débit de catalyseur entrant à l'intérieur du dit tube. Dans ce cas néanmoins, le débit de catalyseur sera directement lié à celui du fluide de transport, c'est à dire qu'on ne pourra pas faire varier à volonté le rapport C/O à l'intérieur du tube interne. Si l'on souhaite découpler le débit de catalyseur entrant dans le tube interne du débit du fluide de transport, il faudra munir le tube interne à son extrémité inférieure d'une vanne permettant de faire varier la section de passage du catalyseur à l'intérieur du dit tube.
Sans aller plus loin dans l'élaboration de l'invention, il est clair qu'un homme du métier peut, en utilisant la présente description, utiliser l'invention dans toutes ses possibilités. Aussi, les mise en oeuvre suivantes doivent-elles être considérées seulement à titre d'exemples, et en aucun cas comme limitatives.
Dans les exemples qui suivent, et qui précèdent, toutes les températures sont définies en degrés Celsius, et les portions et pourcentages sont définis en poids, sauf indication contraire.

### Exemples:

On illustrera l'intérêt de l'invention par trois exemples comparatifs selon l'invention, par rapport à un cas de base correspondant à une unité de FCC conventionnelle.
L'unité FCC traite une charge lourde de type résidu atmosphérique hydrotraité. Cette unité est équipée d'une zone de régénération munie de deux régénérateurs et opère dans les conditions principales décrites au tableau 1 dans la colonne cas de base. Elle est également équipée d'une zone d'injection de fluide inerte (recycle de refroidissement) située au-dessus de la zone d'injection de charge pour refroidir le réacteur en aval de la zone de vaporisation.
Par le calcul, nous avons simulé l'impact qu'aurait un tube placé au bas du riser selon l'invention, à l'intérieur duquel a lieu le craquage d'une quantité d'essence.
Le tube considéré dans cet exemple occupe 15% de la section du riser au niveau des injecteurs de charge, l'entrée étant située à 5 m sous le niveau des injecteurs de charge et la sortie étant située 3 m au dessus desdits injecteurs; le catalyseur étant introduit en dessous de la zone tubulaire. Pour la clarté, les exemples comparatifs (cas 1; 2 et 3) ont été traités dans les conditions suivantes:
- On maintient les conditions de vaporisation de la charge : La température de la charge et du catalyseur à l'équilibre autour du tube interne au niveau de l'injection du recycle de refroidissement reste identique à la température en amont de l'injection du liquide de refroidissement dans les conditions du cas de base, soit 544°C.
- On maintient les conditions de réaction dans la partie supérieure du riser La température en sortie du riser est maintenue constante et égale à 508°C.
- On maintient le débit de charge et des principaux paramètres régissant le bilan thermique de l'unité.
- On maintient une proportion constante d'essence introduite dans le tube par rapport à la charge soit 15 % massique.
- On utilise le même liquide de refroidissement qui est un liquide peu réactif, un LCO léger dans l'exemple.

Dans les 3 cas (1, 2 et 3), nous avons choisi d'imposer un débit d'essence dans le tube égal à 15% du débit de la charge conventionnelle. La température de craquage en sortie du tube a été imposée égale à 580° (cas 1), 600° (cas 2) ou 586°C (cas 3).
Les paramètres du bilan thermique permettant de maintenir les températures dans les différentes parties du riser sont :
- le débit total de catalyseur.
- la fraction du débit de catalyseur circulant dans le tube.
- le débit de recycle liquide de refroidissement

le tableau 1 résume les principales conditions opératoires et les rendements calculés en sortie riser par rapport à la charge injectée.

Dans le cas 1 l'essence injectée à l'entrée du tube est un produit du craquage de la charge, Il s'agit d'essence légère (C5-180°). Le rendement en propylène passe à 5% contre 3,74% dans le cas de base. La conversion est de 72,8 % contre 69% dans le cas de base.

Dans le cas 2 l'essence injectée est la même que dans le cas 1, mais les conditions de craquage sont plus sévères ( température sortie du tube de 600°C contre 580°C dans le cas 1). Le rendement en propylène passe à 5,4%, et la conversion est de 74 %.

Dans le cas 3 la coupe injectée dans le tube est une charge totalement aromatique issue de la coupe essence constituée de C7-C8-C9. Cette charge ne réagit pratiquement pas, et ce troisième cas permet donc d'illustrer l'effet d'étagement du catalyseur, la partie supérieure du riser travaillant avec un catalyseur plus actif que dans le cas de base.
La conversion est augmentée et passe à 76 % contre 69 % dans le cas de base.

**Tableau 1**

| conditions opératoires du riser | | Test run | cas 1 | cas 2 | cas 3 |
|---|---|---|---|---|---|
| température de mélange autour du tube | °C | 544 | 544 | 544 | 544 |
| température en sortie du tube | °C | 580 | 580 | 600 | 586 |
| température sortie réacteur | °C | 508 | 508 | 508 | 508 |
| débit de charge fraiche | T/j | 3869 | 3869 | 3869 | 3869 |
| débit de fluide dans le tube | % charge | 0,00 | 15,00 | 15,00 | 15,00 |
| débit de recycle de refroidissement | % charge | 25,98 | 40,77 | 48,57 | 41,32 |
| vapeur totale dans le riser | % | 12,12 | 12,12 | 12,12 | 12,12 |
| débit de catalyseur autour du tube | T/j | | 21745 | 22635 | 22054 |
| débit de catalyseur dans le tube | T/j | | 5456 | 6732 | 5030 |
| débit de catalyseur dans le riser | T/j | 20932 | 27201 | 29367 | 27084 |
| C/O dans le tube (fluide dans le tube) | (-) | | 9,40 | 11,60 | 8,67 |
| C/O autour du tube (% charge fraiche) | (-) | 5,41 | 5,62 | 5,85 | 5,70 |
| C/O partie supérieure du riser (% charge fraiche) | (-) | 5,41 | 7,03 | 7,59 | 7,00 |
| T Regenerateur 1 | °C | 692,24 | 686,00 | 679,36 | 685,07 |
| T Regenerateur 2 | °C | 771,31 | 762,00 | 753,17 | 760,61 |

| rendements sortie riser | | Test run | cas 1 | cas 2 | cas 3 |
|---|---|---|---|---|---|
| GAZ SECS | % | 4,57 | 5,01 | 5,19 | 4,23 |
| C3= | % | 3,74 | 4,99 | 5,40 | 4,04 |
| LPG | % | 15,47 | 19,18 | 20,20 | 16,73 |
| ESSENCE | % | 41,93 | 38,77 | 38,39 | 45,33 |
| LCO | % | 17,97 | 17,18 | 16,75 | 15,95 |
| SLURRY | % | 12,18 | 10,03 | 9,31 | 8,12 |
| COKE | % | 7,88 | 9,82 | 10,18 | 9,65 |

Il faut noter que la conversion de l'essence dépend fortement de sa nature chimique et qu'on pourrait avec d'autres coupes telles que des coupes C8= oléfiniques par exemple, obtenir facilement des rendements plus élevés tels que 25 à 35% en propylène dans les mêmes conditions. Avec l'essence de craquage considérée dans cet exemple, on peut néanmoins modifier la structure globale des rendements de manière très significative puisque le rendement global en propylène exprimé en fonction de la charge fraîche va passer de 3,7 à 5-5,4%.
En parallèle, on note une augmentation de la conversion dans le riser résultant de l'augmentation du débit de catalyseur dans la partie supérieure, le catalyseur issu du tube étant peu coké, et apportant donc une activité résiduelle importante une fois remélangé avec l'ensemble des effluents en aval du tube interne.

## Revendications

1. Procédé de craquage catalytique en lit fluidisé d'une charge hydrocarbonée dans une zone (1) réactionnelle ascendante ou riser comprenant l'introduction (14) d'un catalyseur régénéré à la partie inférieure du riser, l'injection de la charge au dessus de l'introduction du catalyseur, l'injection (5) d'un gaz de fluidisation du catalyseur à la base du riser, la zone réactionnelle comprenant en sa partie inférieure une zone tubulaire (2) interne et sensiblement coaxiale dans laquelle on fait circuler une partie du catalyseur régénéré au moyen d'un fluide de transport introduit à l'extrémité inférieure de la zone tubulaire, on fait circuler la partie restante du catalyseur et la charge dans une zone annulaire définie entre la zone tubulaire et la paroi du riser, le procédé étant **caractérisé en ce qu'**on fait circuler ladite partie du catalyseur et le fluide de transport dans la zone tubulaire dans des conditions de température et/ou de rapport massique catalyseur sur fluide de transport plus élevées que les conditions de température et/ou de rapport massique catalyseur sur charge qui règnent dans la zone annulaire après injection de la charge, on mélange un premier flux sortant de la zone tubulaire et un deuxième flux sortant de la zone annulaire et on refroidit le mélange obtenu contenant le catalyseur par l'injection (13) d'un fluide inerte et vaporisable au niveau ou au dessus de l'injection de la charge; et on fait craquer le mélange refroidi dans la partie supérieure de la zone réactionnelle.

2. Procédé selon la revendication 1, dans lequel le rapport massique catalyseur sur charge est compris entre 2 et 10 dans la zone annulaire et le rapport massique catalyseur sur fluide de transport est compris entre 5 et 20 dans la zone tubulaire, ledit rapport dans la zone tubulaire étant supérieur à celui dans la zone annulaire.

3. Procédé selon la revendication 1, dans lequel le rapport massique catalyseur sur charge dans la zone annulaire est compris entre 4 et 7 et le rapport masique catalyseur sur fluide de transport dans la zone tubulaire est compris entre 8 et 15.

4. Procédé selon l'une des revendications 1 à 3, dans lequel on refroidit ledit mélange de façon que la température dans la partie supérieure de la zone réactionnelle soit comprise ente 500 et 550°C.

5. Procédé selon l'une des revendications 1 à 4, dans lequel la masse volumique du catalyseur dans la partie de la zone annulaire située en dessous de l'injection de la charge est comprise entre 200 et 600kg/m³ alors que la masse volumique dans la zone tubulaire, plus faible que celle dans cette partie de la zone annulaire, est comprise entre 30 et 200kg/m³.

6. Procédé selon l'une des revendications 1 à 5, dans lequel on contrôle la température en sortie de la zone réactionnelle en contrôlant le débit de catalyseur régénéré et le débit de fluide inerte et vaporisable.

7. Procédé selon l'une des revendications 1 à 6, dans lequel on contrôle la température en sortie de la zone tubulaire en contrôlant le débit du fluide de transport.

8. Procédé selon l'une des revendications 1 à 7, dans lequel on contrôle la température en sortie de la zone annulaire en contrôlant le débit de catalyseur régénéré et le débit du fluide inerte et vaporisable.

9. Procédé selon l'une des revendications 1 à 8, dans lequel la zone tubulaire comprend une extrémité supérieure de sortie du premier flux au même niveau ou au dessus du niveau d'injection de la charge et au même niveau ou au dessous du niveau d'injection du fluide inerte.

10. Procédé selon l'une des revendications 1 à 9, dans lequel le fluide de transport est une charge hydrocarbonée secondaire choisie dans le groupe formée par une essence légère de point d'ébullition final voisin de 160°C, une essence lourde , une coupe LCO, une coupe pétrolière de point final d'ébullition inférieur à 360°C, une essence possédant une majorité d'oléfines longues en C₈-C₁₀ résultant de l'oligomérisation de coupes C4, C5 ou C6, et leur mélanges.

11. Procédé selon l'une des revendications 1 à 10, dans lequel le fluide de transport permettant d'alimenter le tube interne en catalyseur régénéré est choisi dans le groupe formé par l'azote, la vapeur d'eau, le fuel gaz, le gaz de pétrole liquéfié et leurs mélanges.

12. Procédé selon l'une des revendications 1 à 11, dans lequel le flux surfacique de catalyseur circulant à l'intérieur de la zone tubulaire interne est compris entre 0,1 et 10 fois, et préférentiellement entre 0,5 et 3 fois le flux surfacique de catalyseur circulant dans le riser.

13. Procédé selon l'une des revendications 1 à 12, dans lequel la zone tubulaire a son extrémité inférieure située au dessous du niveau d'injection de la charge.

14. Procédé selon l'une des revendications 1 à 13, dans lequel la zone tubulaire possède au moins une restriction à son extrémité inférieure permettant de créer une perte de charge qui facilite le contrôle du débit de catalyseur entrant à l'intérieur de ladite zone tubulaire.

15. Procédé selon l'une des revendications 1 à 14, dans lequel la zone tubulaire est munie à son extrémité inférieure d'une vanne permettant de faire varier la section de passage du catalyseur à l'intérieur de la zone tubulaire.

16. Procédé selon l'une des revendications 1 à 15, dans lequel la zone tubulaire a une section qui, par rapport à la section du riser, se situe dans un rapport compris entre 0,1 et 0,5 et préférentiellement entre 0,15 et 0,30.

17. Procédé selon l'une des revendications 1 à 16, dans lequel la partie inférieure de la zone réactionnelle dans laquelle on injecte la charge et qui comprend la zone annulaire et la zone tubulaire, est au moins en partie de forme tronconique, la base du tronc de cône étant au voisinage de l'extrémité supérieure de la zone tubulaire.

18. Procédé selon l'une des revendications 1 à 17, dans lequel l'extrémité supérieure de la zone tubulaire est située au dessus de la zone d'injection de la charge et au dessous de la zone d'injection du fluide inerte.

## Claims

1. Process for fluidized-bed catalytic cracking of a hydrocarbon feedstock in a rising reaction zone (1) or riser comprising the introduction (14) of a regenerated catalyst at the lower portion of the riser, the injection of the feedstock above the introduction of the catalyst, the injection (5) of a fluidization gas of the catalyst at the base of the riser, whereby the reaction zone comprises in its lower portion an inner tubular zone (2) that is essentially coaxial in which a portion of the regenerated catalyst is circulated with a transport fluid that is introduced at the lower end of the tubular zone; and the remaining portion of the catalyst and the feedstock are circulated in an annular zone that is defined between the tubular zone and the riser wall, whereby the process is **characterized in that** said portion of catalyst and the transport fluid are circulated in the tubular zone under higher conditions of temperature and/or catalyst to transport fluid mass ratio than the conditions of temperature and/or catalyst to feedstock mass ratio that prevail in the annular zone after the feedstock injection, whereby a first flow that exits from the tubular zone and a second flow that exits from the annular zone are mixed, and the mixture that is obtained that contains the catalyst is cooled by injection (13) of an inert and vaporizable fluid at or above the injection of the feedstock; and the cooled mixture is cracked in the upper portion of the reaction zone.

2. Process according to claim 1, wherein the catalyst to feedstock mass ratio is between 2 and 10 in the annular zone and the catalyst to transport fluid mass ratio is between 5 and 20 in the tubular zone, whereby said ratio in the tubular zone is greater than the one in the annular zone.

3. Process according to claim 1, wherein the catalyst to feedstock mass ratio in the annular zone is between 4 and 7 and the catalyst to transport fluid mass ratio in the tubular zone is between 8 and 15.

4. Process according to one of claims 1 to 3, wherein said mixture is cooled so that the temperature in the upper portion of the reaction zone is between 500 and 550°C.

5. Process according to one of claims 1 to 4, wherein the density of the catalyst in the portion of the annular zone below the feedstock injection is between 200 and 600 kg/m³, whereas the density in the tubular zone, lower than that in said portion of the annular zone, is between 30 and 200 kg/m³.

6. Process according to one of claims 1 to 5, wherein the temperature at the outlet of the reaction zone is monitored by monitoring the flow rate of regenerated catalyst and the flow rate of inert and vaporizable fluid.

7. Process according to one of claims 1 to 6, wherein the temperature at the outlet of the tubular zone is monitored by monitoring the flow rate of the transport fluid.

8. Process according to one of claims 1 to 7, wherein the temperature at the outlet of the annular zone is monitored by monitoring the flow rate of regenerated catalyst and the flow rate of inert and vaporizable fluid.

9. Process according to one of claims 1 to 8, wherein the tubular zone comprises an upper outlet end of the first flow at the same level or above the level of injection of the feedstock and at the same level or below the level of injection of the inert fluid.

10. Process according to one of claims 1 to 9, wherein the transport fluid is a secondary hydrocarbon feedstock that is selected from the group that is formed by a light gasoline with a final boiling point that is close to 160°C, a heavy gasoline, an LCO fraction, a petroleum fraction with a final boiling point of less than 360°C, a gasoline that has a majority of long C₈-₁₀ olefins resulting from the oligomerization of C4, C5 or C6 fractions and mixtures thereof.

11. Process according to one of claims 1 to 10, wherein the transport fluid that makes it possible to feed the inner tube with regenerated catalyst is selected from the group that is formed by nitrogen, water vapor, diesel fuel, liquid petroleum gas and mixtures thereof.

12. Process according to one of claims I to 11, wherein the surface flow of catalyst that circulates inside the inner tubular zone is between 0.1 and 10 x, and preferably between 0.5 and 3 x the surface flow of catalyst that circulates in the riser.

13. Process according to one of claims 1 to 12, wherein the tubular zone has its lower end located below the level of injection of the feedstock.

14. Process according to one of claims 1 to 13, wherein the tubular zone has at least one restriction at its lower end that makes it possible to create a pressure drop that facilitates the monitoring of the flow rate of the catalyst that enters inside said tubular zone.

15. Process according to one of claims 1 to 14, wherein the tubular zone is provided at its lower end with a valve that makes it possible to vary the passage section of the catalyst inside the tubular zone.

16. Process according to one of claims 1 to 15, wherein the tubular zone has a section that, relative to the section of the riser, is located in a ratio of between 0.1 and 0.5 and preferably between 0.15 and 0.30.

17. Process according to one of claims 1 to 16, wherein the lower portion of the reaction zone in which the feedstock is injected and which comprises the annular zone and the tubular zone is at least partly tapered, whereby the base of the frustum of cone is close to the upper end of the tubular zone,

18. Process according to one of claims 1 to 17, wherein the upper end of the tubular zone is located above the zone for injecting the feedstock and below the zone for injecting the inert fluid.

## Patentansprüche

1. Verfahren zum katalylischen Kracken im Fließbett einer Kohlenwasserstoffbeschickung in einer aufsteigenden Reaktionszone (1) oder Riser, das die Einführung (14) eines regenerierten Katalysators in den unteren Teil des Risers, die Injektion der Beschickung oberhalb der Einführung des Katalysators, die Injektion (5) eines Wirbelgases des Katalysators am Boden des Risers umfasst, wobei die Reaktionszone in ihrem unteren Abschnitt eine innere und im Wesentlichen koaxiale röhrenförmige Zone (2) umfasst, in der ein Teil des regenerierten Katalysators mittels eines Transportfluids zirkuliert wird, das am unteren Ende der röhrenförmigen Zone eingeführt wird, der übrige Teil des Katalysators und die Beschickung in einer ringförmigen Zone zirkuliert wird, die zwischen der röhrenförmigen Zone und der Wand des Risers definiert ist, wobei das Verfahren **dadurch gekennzeichnet ist, dass** der Teil des Katalysators und das Transportfluid in der röhrenförmigen Zone unter Temperaturbedingungen und/oder Masseverhältnisbedingungen von Katalysator zu Transportfluid zirkuliert wird, die höher sind als die Temperaturbedingungen und/oder Masseverhältnisbedingungen von Katalysator zu Beschickung, die in der ringförmigen Zone nach der Injektion der Beschickung herrschen, ein erster Strom, der aus der röhrenförmigen Zone austritt, und ein zweiter Strom, der aus der ringförmigen Zone austritt, gemischt wird und das erhaltene Gemisch, das den Katalysator enthält, durch Injektion (13) eines inerten und verdampfbaren Fluids in Höhe oder oberhalb der Injektion der Beschickung abgekühlt wird; und dass das abgekühlte Gemisch in dem oberen Teil der Reaktionszone gekrackt wird.

2. Verfahren nach Anspruch 1, bei dem das Masseverhältnis Katalysator zu Beschickung in der ringförmigen Zone im Bereich zwischen 2 und 10 liegt und das Masseverhältnis Katalysator zu Transportfluid in der röhrenförmigen Zone im Bereich zwischen 5 und 20 liegt, wobei das Verhältnis in der röhrenförmigen Zone größer ist als das in der ringförmigen Zone.

3. Verfahren nach Anspruch 1, bei dem das Masseverhältnis Katalysator zu Beschickung in der ringförmigen Zone im Bereich zwischen 4 und 7 liegt und das Masseverhältnis Katalysator zu Transportfluid in der röhrenförmigen Zone im Bereich zwischen 8 und 15 liegt.

4. Verfahren nach einem der Ansprüche 1 bis 3, bei dem das Gemisch derart abgekühlt wird, dass die Temperatur im oberen Teil der Reaktionszone im Bereich zwischen 500 und 550 °C liegt.

5. Verfahren nach einem der Ansprüche 1 bis 4, bei dem die Dichte des Katalysators in dem Teil der ringförmigen Zone, die unterhalb der Injektion der Beschickung liegt, im Bereich zwischen 200 und 600 kg/m³ liegt, während die Dichte in der röhrenförmigen Zone, die geringer ist als diejenige in diesem Teil der ringförmigen Zone, im Bereich zwischen 30 und 200 kg/m³ liegt.

6. Verfahren nach einem der Ansprüche 1 bis 5, bei dem die Temperatur am Auslass der Reaktionszone kontrolliert wird, indem die Durchflussmenge des regenerierten Katalysators und die Durchflussmenge des inerten und verdampfbaren Fluids kontrolliert wird.

7. Verfahren nach einem der Ansprüche 1 bis 6, bei dem die Temperatur am Auslass der röhrenförmigen Zone kontrolliert wird, indem die Durchflussmenge des Transportfluids kontrolliert wird.

8. Verfahren nach einem der Ansprüche 1 bis 7, bei dem die Temperatur am Auslass der ringförmigen Zone kontrolliert wird, indem die Durchflussmenge des regenerierten Katalysators und die Durchflussmenge des inerten und verdampfbaren Fluids kontrolliert wird.

9. Verfahren nach einem der Ansprüche 1 bis 8, bei dem die ringförmige Zone ein oberes Ende zum Auslass des ersten Stroms auf gleicher Höhe oder oberhalb der Injektionshöhe der Beschickung und auf gleicher Höhe oder unterhalb der Injektionshöhe des inerten Fluids umfasst.

10. Verfahren nach einem der Ansprüche 1 bis 9, bei dem das Transportfluid eine sekundäre Kohlenwasserstoffbeschickung ist, die aus der Gruppe, gebildet aus einem Leichtbenzin mit einem Endsiedepunkt nahe bei 160 °C, einem Schwerbenzin, einem LCO-Schnitt, einem Erdölschnitt mit einem Endsiedepunkt kleiner als 360 °C, einem Benzin, das überwiegend lange C₈-C₁₀-Olefine aufweist, die aus der Oligomerisation von C4-, C5- oder C6-Schnitten resultieren, und deren Gemischen ausgewählt ist.

11. Verfahren nach einem der Ansprüche 1 bis 10, bei dem das Transportfluid, das es ermöglicht, das innere Rohr mit regeneriertem Katalysator zu versorgen, aus der Gruppe, gebildet aus Stickstoff, Wasserdampf, Brenngas, Flüssiggas und deren Gemischen ausgewählt ist.

12. Verfahren nach einem der Ansprüche 1 bis 11, bei dem der Oberflächenstrom des Katalysators, der innerhalb der röhrenförmigen Zone zirkuliert im Bereich zwischen 0,1 und 10 Mal und bevorzugt zwischen 0,5 und 3 Mal dem Oberflächenstrom des Katalysators liegt, der in dem Riser zirkuliert.

13. Verfahren nach einem der Ansprüche 1 bis 12, bei dem die röhrenförmige Zone an ihrem unteren Ende unterhalb der injektionshöhe der Beschickung liegt.

14. Verfahren nach einem der Ansprüche 1 bis 13, bei dem die röhrenförmige Zone mindestens eine Verengung an ihrem unteren Ende aufweist, die es ermöglicht, einen Druckabfall zu erzeugen, der die Kontrolle der Durchflussmenge des Katalysators erleichtert, der ins Innere der röhrenförmigen Zone eintritt.

15. Verfahren nach einem der Ansprüche 1 bis 14, bei dem die röhrenförmige Zone an ihrem unteren Ende mit einem Ventil ausgestattet ist, das es ermöglicht, den Durchgangsquerschnitt des Katalysator im Innern der röhrenförmigen Zone variieren zu lassen.

16. Verfahren nach einem der Ansprüche 1 bis 15, bei dem die röhrenförmige Zone einen Querschnitt hat, der, bezogen auf den Querschnitt des Risers, in einem Verhältnis im Bereich zwischen 0,1 und 0,5 und vorzugsweise zwischen 0,15 und 0,30 liegt.

17. Verfahren nach einem der Ansprüche 1 bis 16, bei dem der untere Teil der Reaktionszone, in die die Beschickung injiziert wird und die die ringförmige Zone und die röhrenförmige Zone umfasst, mindestens teilweise kegelstumpfförmig ist, wobei die Basis des Kegelstumpfs in der Nähe des oberen Endes der röhrenförmigen Zone liegt.

18. Verfahren nach einem der Ansprüche 1 bis 17, bei dem das obere Ende der röhrenförmigen Zone oberhalb der Injektionszone der Beschickung und unterhalb der Injektionszone des inerten Fluids liegt.
